# EUROPEAN PATENT SPECIFICATION

(11) **EP 1 868 725 B1**
(45) Date of publication and mention of the grant of the patent: **18.01.2012**
(21) Application number: 06737393.6
(22) Date of filing: 08.03.2006
(51) Int. Cl.: B01L 99/00

(54) **USE OF MICROFLUIDIC DEVICE FOR IDENTIFICATION, QUANTIFICATION, AND AUTHENTICATION OF LATENT MARKERS**
VERWENDUNG EINER MIKROFLUIDISCHEN VORRICHTUNG ZUR IDENTIFIKATION, QUANTIFIZIERUNG UND AUTHENTIFIZIERUNG LATENTER MARKER
UTILISATION D' UN DISPOSITIF MICROFLUIDIQUE POUR LA IDENTIFICATION, QUANTIFICATION, ET AUTHENTIFICATION DE MARQUEURS LATENTS

(30) Priority: 08.03.2005 US 659669 P
(43) Date of publication of application: 26.12.2007
(73) Proprietor: Authentix, Inc., Addison, TX 75001 (US)
(72) Inventor: EASTWOOD, Ian, Rossendale Lanes BB4 9JZ (GB); DORLAND, Erwin, North Yorkshire YO10 4PP (GB); TAYLOR, Andrew, West Yorkshire LS15 7LF (GB); BERGSTROM, Edmund, T., Adedison, Texas 75001 (US); GOODALL, David, Adedison, Texas 75001 (US); AL-JAFARI, Mohammed, Adedison, Texas 75001 (US)
(74) Representative: Peterreins, Frank
(86) International application number: PCT/US2006/008217
(87) International publication number: WO 2006/096761

(56) References cited:
- WO-A-96/14934
- US-A1- 2004 005 628
- US-B1- 6 297 061
- US-B1- 6 541 213

## Description

### BACKGROUND OF THE INVENTION

### 1. Field of the Invention

The present invention relates generally to the field of identification and authentication. More particularly, the present invention relates to methods and devices for identification, quantification, and authentication of one or more materials especially those containing one or more covert markers.

### 2. Description of Related Art

Identification and authentication of solid and/or liquid materials may use many techniques, including the use of overt or covert features or additives, such as colorants and dyes, *e.g*., tracers or markers. The overt or covert features or additives are typically used to identify, detect, authenticate, and distinguish a product or manufacturer's material from others and prevent misuse, adulteration, counterfeiting, and/or imitations of the material.

While overt additives or features are readily identifiable, covert additives and features are not. In many cases, covert additives or features require that the additive or feature be isolated from the material in order to better identify, quantify, and/or authenticate. Conventionally techniques for isolating and identifying an additive or feature from a material typically include a series of complicated steps and a number of different tools and/or machines. The steps may include, without limitation, processing, extraction, separation, identification, and quantification, where each step typically requires its own set of machines and tools, and subsequently, its own set of errors and waste products.

Among other limitations, current technologies prohibit rapid identification and quantification of a covert additive or feature. In addition, many of the machines and tools are bulky and not available outside of a laboratory setting, making it impossible to perform any type of identification, quantification, or authentication *in situ.* Further, there is an increased risk of handling and contamination and the burden of additive waste products. As such, current practice for the identification and authentication of one or more covert markers in a material is typically time consuming, produces errors and is expensive.

Referenced shortcomings of conventional technology mentioned above are not intended to be exhaustive, but rather are among many that tend to impair the effectiveness of previously known techniques concerning the methods and devices for identification and authentication of materials, particularly those with covert features and/or additives. Other noteworthy problems may also exist; however, those mentioned here are sufficient to demonstrate that a need exists for the techniques described and claimed here.

WO 96/14934 A discloses a mesoscale sample preparation device capable of providing microvolume test samples, separated into a cell-enriched fraction and a fraction of reduced cell content, for performing various analyses, such as binding assays, determinations involving polynucleotide amplification and the like. Analytical systems including such devices are also disclosed.

US 6 541 213 B 1 discloses methods and apparatuses for determining presence and concentration of analytes by exploiting molecular binding reactions and differential diffusion rates. Analyte particles and binding particles are allowed to diffuse toward each other, and slowing of the diffusion front is detected when they meet. From the position of the diffusion front, presence and concentration of analyte particles can be determined. Methods for separating particles of similar size in a diffusion separator are also provided.

### SUMMARY OF THE INVENTION

The present invention relates to a method according to claim 1 and a use of a device according to claim 9. Advantageous embodiments are described in the dependent claims. The present disclosure provides, among other techniques, methods and systems for identifying, authenticating, and quantification of one or more materials comprising covert features and/or additives.

In one respect a system is provided which can be used according to the invention. The system includes : a microfluidic cell for authenticating a fluid, a liquid transfer system, and a detector. The microfluidic cell includes a plurality of channels, a first inlet coupled to the plurality of channels for receiving a fluid comprising markers. The fluid may include, without limitation, a fuel, a lubricant, spirits, or liquid pharmaceuticals. A second inlet is coupled to the plurality of channels, and is configured to receive an agent for transferring the markers through the microfluidic cell. In addition, the agent is configured to transfer markers in the fluid (*e.g*., physically or chemically altering the markers) into a form such that the markers may be optically detected. The microfluidic cell also includes an outlet coupled to the channel. The outlet may be configured to remove the fluid, leaving behind the markers.

In other respects, the microfluidic cell may include a plurality of channels for providing a laminar flow through the microfluidic cell. For example, a first channel may transport a fluid including markers and a second channel may transport a first agent for transferring the markers.

The microfluidic cell may also include an outlet for removing liquids within the microfluidic cell. For example, the outlet may be coupled to one of the plurality of channels and may be configured to remove the fluid, leaving substantially markers in the microfluidic cell. The microfluidic cell may also include inlets for receiving liquids, including but the fluid including the markers and/or agents.

The microfluidic cell may include a mixer coupled to the plurality of channels. The mixer may be configured to mix components of the channels to yield a mixture. That mixture may be transported via a third channel, where detection can occur.

The liquid transfer system, which is coupled to the microfluidic cell, is configured to provide the fluid to the microfluidic cell. In one respect, the liquid transfer system may include a microscale pump system. Alternatively or in addition to, the liquid transfer system may include a syringe driver, or other suitable pumps, including, without limitation, a single charge pump, plunger or piston pump, circumferential pump, diaphragm and bellow pump, gear pump, lobed pump, flexible-vane pump, nutating pump, peristatic pump, volute and diffuser pump, propeller and mixed flow pump, peripheral pump, a syringe, and/or an injector.

The detector, which is coupled to the microfluidic cell, is used to, among other functions, to identify the markers of the microfluidic cell. The detector may includes an electromagnetic radiation source for illuminating the markers. The detector also includes a sensor configured to collect emissions from the markers. The detector may also include other components, including, without limitation, a data collector, a data input device, a data storage device, a data output device, a data retrieval device or any combinations thereof.

In other respect, a method is provided. The method include the steps of providing a microfluidic cell. The microfluidic includes, among other components, a plurality of channels. Next, the method provide a fluid comprising markers to a first inlet coupled to the plurality of channels. An agent is also provided to the microfluidic cell via, for example a second inlet. The markers of the fluid are transferred through the microfluidic cell, and are subsequently transformed by the agent into activated markers. In one embodiment, the markers may be transformed via a hydrolysis, reduction, oxidation, structural modification, ionization, electrolysis, complexation, or a combination of the above techniques.

The method may also provide removing the fluid through an outlet of the microfluidic cell, where the outlet may be coupled to the plurality of channels. The removal of the fluid may leave substantially the markers and agent in the microfluidic cell.

Next, the method identifies and quantifies the markers. In one embodiment, the method may provide steps for illuminating the markers with an electromagnetic radiation source operating in visible, infrared, and/or ultraviolet spectrum. The method also provides a sensor to collect emissions from the markers.

In some embodiments, the method may provide one or more agents to the microfluidic cell. A first agent may be provided with a fluid including markers to produce a first laminar flow. The second agent may be provided after the fluid is removed from the microfluidic cell, where the first agent and second agent provide a second laminar flow. The method may provide steps for mixing the first and second agents with the markers yielding a mixture comprising transformed markers. The optical characteristics of the transformed markers may be subsequently detected and the authenticity of the fluid may be determined.

The term "marker" as defined and used in this disclosure refers to a substance which is detected, such as, but not limited to, linear or non-linear phosphors, organic or inorganic phosphors, or other suitable materials that can exhibit optical characteristics when excited by a light source.

In some embodiments, a marker may be a particle, a microparticle, or a nanoparticle, or the like. In other embodiments, a marker may be a substance that may be encapsulated into for example, a particle, a microparticle, or a nanoparticle. Alternatively, the marker may be a substance that may be dissolved in a material. The term "features," "additives" or the like, as defined and used in this disclosure typically refer markers and may be used interchangeably throughout the disclosure.

The terms "covert marker" and "latent marker" as defined and used in this disclosure refer to markers that are not visibly perceptible by the naked eye. The terms may be used interchangeably throughout the disclosure.

The terms "transformed marker" or "activated marker," as defined and used in this disclosure refer to markers that can be detected based on its optical characteristics. The terms may be used interchangeably throughout the disclosure.

The term "transferred marker," as defined and used in this disclosure refers to displacing a marker through a microfluidic cell. In one respect, a marker may be transferred from one liquid to another liquid. Alternatively, a marker may be transferred from one latent flow to another latent flow.

The term "material," as defined and used in this disclosure, refers to a solid or a liquid material to be authenticated.

The terms "a" and "an" are defined as one or more unless this disclosure explicitly requires otherwise.

The term "substantially," "about," and its variations are defined as being largely but not necessarily wholly what is specified as understood by one of ordinary skill in the art, and in one-non and in one non-limiting embodiment the substantially refers to ranges within 10%, preferably within 5%, more preferably within 1%, and most preferably within 0.5% of what is specified.

The term "coupled" is defined as connected, although not necessarily directly, and not necessarily mechanically.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a method or device that "comprises," "has," "includes" or "contains" one or more steps or elements possesses those one or more steps or elements, but is not limited to possessing only those one or more elements. Likewise, a step of a method or an element of a device that "comprises," "has," "includes" or "contains" one or more features possesses those one or more features, but is not limited to possessing only those one or more features. Furthermore, a device or structure that is configured in a certain way is configured in at least that way, but may also be configured in ways that are not listed.

Other features and associated advantages will become apparent with reference to the following detailed

### BRIEF DESCRIPTION OF THE DRAWINGS

The following drawings form part of the present specification and are included to further demonstrate certain aspects of the present disclosure. The disclosure may be better understood by reference to one or more of these drawings in combination with the detailed description of specific embodiments presented herein.
**FIG. 1** shows a system for identifying, quantifying, and authenticating a material, in accordance with embodiments of this disclosure.
**FIG. 2** shows a microfluidic cell, in accordance with embodiments of this disclosure. **FIGs. 3A, 3B,** and **3C** show a detection component, in accordance with embodiments of this disclosure.
**FIG. 4** shows a detection component, in accordance with embodiments of this disclosure. **FIG. 5** is a graph illustrating flow rate effects, in accordance with embodiments of this disclosure.
**FIG. 6** is a graph illustrating linearity, in accordance with embodiments of this disclosure. **FIG. 7** shows a plug flow, in accordance with embodiments of this disclosure.
**FIG. 8** shows a laminar flow, in accordance with embodiments of this disclosure.
**FIG. 9** is a graph of a signal detected from activated markers, in accordance with embodiments of this disclosure.

### DETAILED DESCRIPTION OF THE INVENTION

The disclosure and the various features and advantageous details are explained more fully with reference to the nonlimiting embodiments that are illustrated in the accompanying drawings and detailed in the following description. Descriptions of well known starting materials, processing techniques, components, and equipment are omitted so as not to unnecessarily obscure the invention in detail. It should be understood, however, that the detailed description and the specific examples, while indicating embodiments of the invention, are given by way of illustration only and not by way of limitation. Various substitutions, modifications, additions, and/or rearrangements within the underlying inventive concept will become apparent to those skilled in the art from this disclosure.

In the description that follows, like parts may be identified throughout the disclosure and drawing with the same reference numerals, respectively. The drawing figures are not necessarily to scale and certain features may be shown exaggerated in scale or in somewhat generalized in schematic form in the interest of clarity and conciseness.

The present disclosure provides a single integrated unit that may be used in-line, or *in situ,* and configured to perform a number of complex laboratory processes, such as, but not limited to, sampling to data analysis and reporting. In one respect, the present disclosure provides micro fabrication techniques that allow data analysis to be performed on a micro-scale level. Examples of these technologies, include, without limitation, lab-on-a-chip (LOC), micro total analysis systems (µ-TAS), and micro electromechanical systems (MEMS). These technologies enable devices produced to be lighter, smaller, and more robust than their laboratory-scale counterparts. Additionally, the device and techniques of the present disclosure increases the speed of diffusion due to, among others things, the geometry of device and the characteristics of a material flowing through the channel.

### System for Identifying, Quantifying Markers to Authenticate a Material

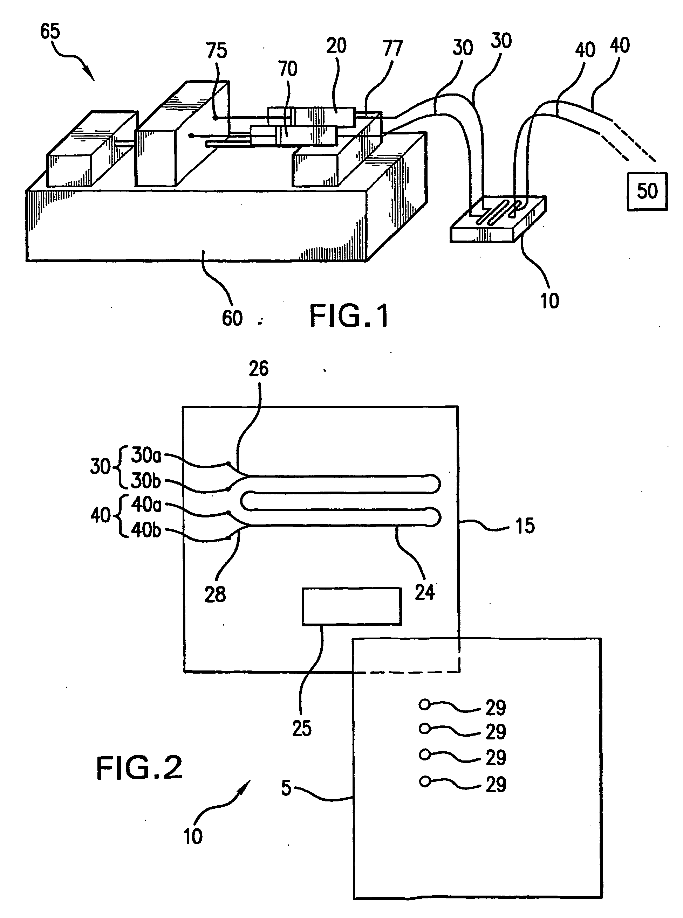

Referring to FIG. 1, a system for authenticating a material according to one aspect of the present disclosure is shown. System 65 includes microfluidic cell 10 coupled to at least one liquid transfer system 20 by at least one inlet 30. Liquid transfer system 20 may be housed with driver 60 that operates, in part, to actuate the at least one liquid transfer system 20. Liquid transfer system 20 may be coupled to a fluid holding body 70 that holds one or more liquids. Additional fluid reservoirs (not shown) may also function with liquid transfer system 20. In one respect, driver 60 may deliver the one or more liquids into fluid holding body 70 via driving block 75 used to push the one or more liquids from fluid holding body 70 to inlet 30 via exit port 77. In some embodiments, driver 60 may deliver liquid at a number of different flow rates and may deliver liquid simultaneously to one or more pumps.

In some embodiments, liquid transfer system 20 may include a microscale or a macroscale pump for providing fluids to microfluidic cell 10. Liquid transfer system 20 may include a mechanically actuated pump. Alternatively, in some embodiments, liquid transfer system 20 may include a manually actuated pump. More generally, liquid transfer system 20 may be a positive-displacement (either bulk-handling or metering pumps) or a non-positive-displacement (centrifugal) system for transferring fluids. Examples of pumps that may be used in a liquid transfer system 20 may include, without limitation, a single charge pump, plunger or piston pump, circumferential pump, diaphragm and bellow pump, gear pump, lobed pump, flexible-vane pump, nutating pump, peristatic pump, volute and diffuser pump, propeller and mixed flow pump, peripheral pump, a syringe, and/or an injector. It is noted that when more than one pump are assembled, all of them do not have to be operational, *i.e*., one or more of the pumps may be inactive.

The at least one inlet 30 introduces one or more liquids to portions of microfluidic cell 10. In some embodiments, inlet 30 may introduce only one liquid to microfluidic cell 10. Alternatively, inlet 30 may provide more than one liquid to microfluidic cell 10. When more than one liquid is introduced, the fluids may be provided by only one inlet (*e.g*., when the inlet has a bifurcation prior to entry into microfluidic cell 10) or alternatively, via more than one inlet. The one or more liquids may subsequently be removed by one or more outlets 40 that may be coupled to at least one detection component 50. Inlet(s) 30 and outlet(s) 40 may comprise tubings (*e.g*., capillaries or other suitable passageways) that may be configured to move liquid. The tubings may be continuous or may interface with connectors and/or additional tubings, *e.g*., for introducing additional components, such as a fluid reservoir (not shown) and/or another pump or pump system. The tubings and connectors may be resistant to most chemicals and are, in portable embodiments, typically capillary size. When more than one inlet and/or one or more outlets are assembled, not all inlets and/or outlets have to be operational. One or more inlets and/or one or more outlets may be inactive or blocked.

System 65 may be coupled to a processor. In some embodiments, data from detector 50 may be sent to the processor. In other embodiments, the processor may provide instructions to system 65 and may control the functionalities of the system. The processor may be any computer-readable media known in the art. For example, it may be embodied internally or externally on a hard drive, ASIC, CD drive, DVD drive, tape drive, floppy drive, network drive, flash drive, USB drive, or the like. The processor is meant to indicate any computing device capable of executing instructions for receiving the data from detector 50 amongst other functions. In one embodiment, the processor is a personal computer (*e.g*., a typical desktop or laptop computer operated by a user). In another embodiment, the processor may be a personal digital assistant (PDA) or other handheld computing device.

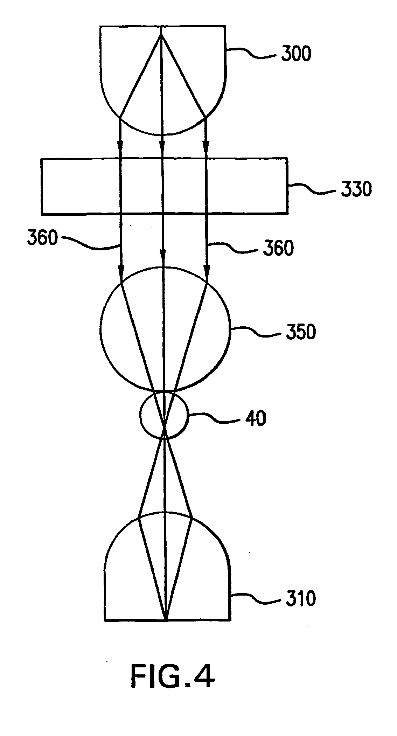

In some embodiments, the processor may be a networked device and may constitute a terminal device running software from a remote server, wired or wirelessly. Input from a user, detector, or other system components, may be gathered through one or more known techniques such as a keyboard and/or mouse. Output, if necessary, may be achieved through one or more known techniques such as an output file, printer, facsimile, e-mail, web-posting, or the like. Storage may be achieved internally and/or externally and may include, for example, a hard drive, CD drive, DVD drive, tape drive, floppy drive, network drive, flash, or the like. The processor may use any type of monitor or screen known in the art, for displaying information, such as but not limited to, figures similar to FIGS. 4, 5, and 9. For example, a cathode ray tube (CRT) or liquid crystal display (LCD) can be used. One or more display panels may also constitute a display. In other embodiments, a traditional display may not be required, and processor 410 may operate through appropriate voice and/or key commands.

The above system shows a non-limiting embodiment. One of ordinary skill in the art can recognize each component may be optional. Alternatively, more than one of each component may be provided.

### Microfluidic Cell

FIG. 2 shows a zoomed-in view of microfluidic cell 10 comprising any suitable material, such as, but not limited to glass, silicon, plastic, quartz, metal, resin, and/or other chemical resistant materials or other transparent material known in the art. Microfluidic cell 10 may include a substrate comprising a plurality of microchannels (*e.g*., channel 24 of FIG. 2) that may be configured for parallel multilayer flow such as the system described in U.S. Patent Publication No.: 20040219078 . In some respects, microfluidic cell 10 may comprise a plurality of microchannels (*e.g*., channel 24) that may be arranged on various positions of microfluidic cell (*e.g.,* two or more channels placed adjacent to one another). Each of the different microchannels may be in communication with another microchannel via a guide microchannel that identifies a specific fluid.

Microfluidic cell 10 may include a plurality of substrates that may be laminated together such that the microchannels are arranged on surfaces of different substrates, and may be vertically configured to allow different microchannels to communicate with another microchannel through a vertically penetrating guide hole for transporting a fluid.

In other respects, microfluidic cell 10 may include a plurality of substrates that are laminated, wherein an inlet (*e.g*., inlet 30) for supplying a fluid to the multilayer flow microchannel and an outlet (*e.g*., outlet 40) for discharging a fluid from microchannel 10 are each arranged on the surface of the same or different substrate.

Each of the above microchannel configuration may provide for a multilayer flow operation, where a multilayer flow includes gas/liquid interface or a liquid/liquid interface (*e.g*., aqueous/organic phase) that may be formed within the microchannel. In one respect, the microchannel configurations may be adapted to perform a single type of unit operations including, without limitation, mixing/reacting, extraction, separation, identification, quantification, and/or authentication.

The microchannels of microfluidic cell 10 may be coupled to a guide structure (not shown). In one respect, the guide structure may be coupled to a bottom-side of the microchannels. Alternatively, the guide structure may be coupled to the microchannels in a position corresponding to parallel interfaces of the fluids forming a multilayer flow through the microchannels. In this configuration, the guide structure may extend toward the flow direction and provides stabilization at liquid/liquid interface or a gas/liquid interface.

In some respects, the microchannel may have a width of about 500 micrometers or less and a depth of about 300 micrometers or less. In one embodiment, the microchannel may include the dimensions in the range of about 50 to 100 micrometers in width and about 25 to 50 micrometers in depth. These dimensions offer the advantages of reduced fluid volume over the microfluidic cell. Very small quantities of fluids are needed to fill the microchannels and thus, a material may be readily identifiable in a more efficient manner, while minimizing waste products and contamination.

The microchannel may be determined based on the material to be authenticated and other design configurations. The microchannels of microfluidic cell 10 may be fabricated using, for example, silicon processing techniques such as, but not limited to chemical processing steps known in the art. Such steps may include, without limitation, a deposition process (*e.g*., physical vapor deposition, chemical vapor deposition, electrochemical deposition, molecular beam epitaxy, or atomic layer deposition), a stripping process (*e.g*., wet etching, dry etching, ion milling, plasma etching, reactive ion etching or chemical-mechanical planarization), a patterning process (*e.g*., lithography), and/or a modification of electrical or mechanical properties (*e.g*., implantation or anneal).

It is known in the art that certain fabrication processes are preferred over others. For example, a dry etch process may be preferred due to its ability to control the process (*e.g*., selectivity of materials), and thus, may provide certain microchannel profiles that are unique over other methods. For example, reactive-ion etching (RIE) is a method of dry etching that uses a combination of mechanical and physical etching mechanisms. An RIE process may provide unique profiles due to its judicious selection and optimization of reactant gases, pressure, temperature, and power sources. RIE can thus attain a high degree of anisotropy (one-direction) as well as selectivity, preferably in high aspect-ratio etching.

Referring again to FIG. 2, in some embodiments, microfluidic cell 10 may include two portions, an upper portion 5 and lower portion 15. In some respects, upper portion 15 may comprise a different material than lower portion 15. Alternatively, the upper portion 15 and the lower portion 5 may comprise a similar material. Upper portion 5 may fit onto lower portion 15 and, in some embodiments, the two portions may be sealed using a chemically resistant seal known in the art.

In one example, upper and lower portions 5 and 15 may include two optically polished glass plates. Lower portion 15 may include an etched channel etched with an approximate length of about 8.5 cm, a width of about 60 micrometers, and a depth of about 25 micrometers, although other dimensions may be suitable. Each end of the etched channel bifurcated into two channels in a Y shape and each of these bifurcations may be coupled to a capillary. Each capillary may be coupled to a bifurcated channel through the upper portion 5, which may be used as a cover. In some embodiments, two capillary inlets may enter a microchannel through upper portion 5 and may exit through the lower portion 15.

In some respect, upper portion 5 and lower portion 15 may be an integral unit. In one embodiment, upper portion 5 and lower portion 15 may be sealed together using, for example, chemically resistant ceramic glue, fusion bonded or any other adhesive known in the art.

In some embodiments, each of the capillaries may be approximately about 10 cm long with an internal diameter of about 100 micrometers. These capillaries can be interfaced to other capillaries or to ends of pumps using additional tubing, such as polytetrafluoroethylene (PTFE) tubing of the correct internal diameter. In one example, where multiple capillaries are available, one capillary outlet may be blocked, so that only one capillary outlet may be operating. This single operable capillary outlet may be coupled to a detection assembly, using a PTFE sleeve.

The microfluidic cell includes one inlet for receiving a material comprising at least one latent marker. The inlet may also receive an agent that transforms the latent marker to an active marker. Alternatively, a separate inlet may be provided to receive the agent.

As the material and agent are traversing through the microfluidic cell, a detector comprising a light source coupled to the microfluidic cell, irradiates the fluid flow, and excites the activated markers. The emission from the activated markers is collected using a sensor coupled to the detector. The collection of the signals may continue until the liquids (both the material comprising the marker and the agent) exit the microfluidic cell via an outlet.

### Identification and Quantification of a Marker to Authenticate a Material

In one embodiment, for identification, quantification, and authentication of a solid material comprising latent markers, one or more portions of the solid material may be removed and suspended in a liquid, where the one or more portions may dissolve in the liquid. In one respect, the solid material may include markers (*e.g*., glue ink, security ink, and other suitable markers) that may be evenly distributed throughout the material. In particular, the one or more latent markers may dissolve in the liquid and may be detectable using techniques of the present disclosure.

For identification, quantification, and authentication of a material in liquid form, the material comprising latent markers may be introduced into the one or more channels via inlet 30a. The material may include, without limitation, a fuel, a lubricant, spirits, liquid pharmaceuticals, or any other fluids that requires marking in order to preserve the integrity and authenticity of the fluid.

An agent capable of transforming the latent form of the marker into an active form may be provided to the channels via inlet 30b. In some embodiments, the agent may be introduced to the microfluidic cell at about substantially the same time as the liquid material. The agent may be any suitable agent that promotes transformation of the covert marker. For example, the agent may include, without limitation, an acidic solution or a base solution. Alternatively, the agent may be an element (*e.g*., oxygen, metal compound, and the like) that may bond with or alter the physical and/or optical characteristics of the markers such that it may detectable. The agent may include an anti-Stokes luminescent compound as describe in U.S. Patent Publication No. 20050260764 entitled "Method and Apparatus for Monitoring Liquid for the Presence of An Additive," by Grisby *et al.* Other suitable agents capable of changing a physical or chemical property of a latent marker to an active marker may also be used.

In some embodiments, the agent may be suspended in a liquid. The liquid may be a solvent that prevents further modification of the active form of a marker. Examples of the solvent (*e.g*., agent) may include, without limitation, octanol, butanol, ethanol, octanes, hexanes, alcohol strings of suitable lengths, and other suitable aqueous solutions. Thus, the active form of a marker may be in a detectable form that can be readily quantifiable. For example, upon leaving microfluidic cell 10, the active form of the marker may be an analyte that may be detected by a detector such as detection component 50 (shown in FIG. 1). In some embodiments, the markers may be present in the one or more outlets 40 (*e.g*., 40A and/or 40B) as shown in FIG. 2. In other embodiments, when a single detector is in use, only one outlet may be necessary. As such, outlet 40a may be active while outlet 40b may be blocked or vice versa. Alternatively, the markers may be present within a channel (*e.g*., channel 22) of the microfluidic cell and may detected using a detector coupled to the microfluidic cell.

In some embodiments, a surfactant may be added prior to, at the same time as, or after the introduction of the agent and liquid material via an inlet coupled to a channel of the microfluidic cell. The surfactant may modify the surface of the channels (*e.g*., reduces surface tension) and thus, may control the flow of fluids. In one respect, the surfactant may include, without limitation, butanol, or other hexanol surfactants.

Liquids (*e.g*., fluid to be authenticated, agents, *etc*.) entering the microfluidic cell 10 may flow in a single direction, entering from the at least one inlet 30 (*e.g*., 30a and 30b) and exiting the one or more outlets 40 (*e.g*., 40a and 40b). To promote optimal flow of liquid through the device of the present invention, inlets 30a and 30b and the one or more outlets 40 (*e.g*., 40a and/or 40b) are of similar diameter to each other and to the one or more channels (*e.g*., channel 22). Alternative fittings (*e.g*., outlet and inlet ports coupled to the capillaries) may be used as appropriate.

In some embodiments, inlets 30a and 30b fit into channel 22, where inlets 30A and 30B form an integral unit. Alternatively, inlets 30a and 30b may be two separate and distinct inlet, each coupling to inlet fork 26. Similarly, outlets 40a and 40b may be an integral unit or may be two distinct components coupled to channel 24 through outlet fork 28. Inlet fork 26 and outlet fork 26 may exist as separate components or may be continuous with the channel. When an inlet contacts a channel (with or without a fork or other such fitting), the inlet may enter through upper portion 5 via top openings 29 or side openings (not shown) or may fit into lower portion 15 via side or bottom openings (not shown) or may enter between upper portion 5 and lower portion 15 (not shown).

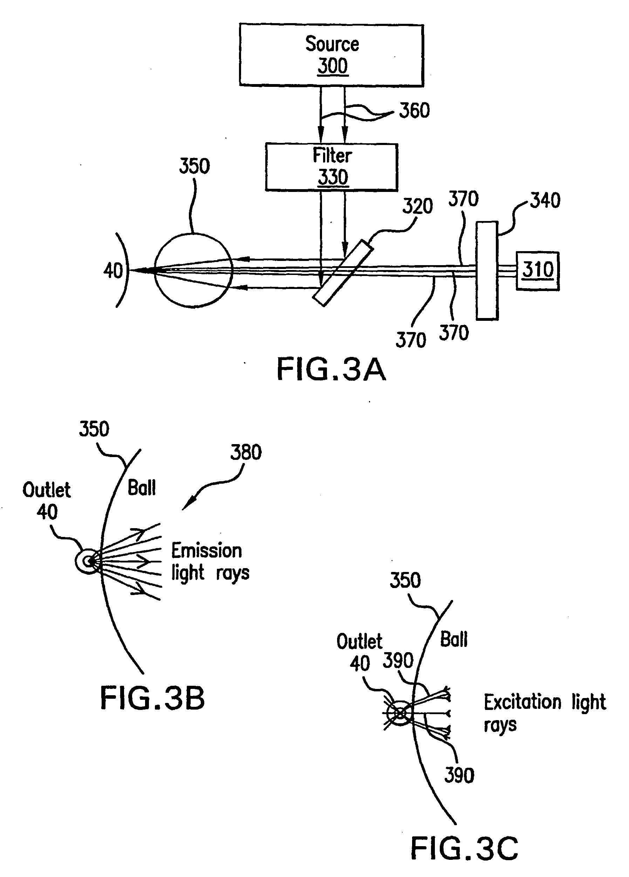

Referring to FIG. 3A, a schematic of detection component 50 is shown. Detection component 50 may include electromagnetic radiation source 300, sensor 310, and beam splitter 320. In some embodiments, first filter 330 and second filter 340 may be included, although one of ordinary skill in the art may recognize that the filters may be optional components. Example of source 300 may include a light emitting diode, a laser, a bulb, or the like capable of providing an ultraviolet wavelength, a visible wavelength, a infrared wavelength, or a combination thereof. In one embodiment, beam splitter 320 may include, without limitation, a dichroic beam splitter. An example of sensor 310 may be a photodiode, although other suitable sensors may be used. In one embodiment, sensor 310 may include integrated amplifier and additional data collection, data analyses, and data storage components as are known to one of ordinary skill in the art.

In one respect, detection component 50 may be placed in a housing for ease in positioning of the component. Machined plastic or other suitable materials may serve as the housing.

One or more outlets may be coupled detection component 50. Outlets may include one or more outlets 40 which may be positioned proximate to optical lens 350. Detecting outlet 40 may be optionally coated for protection. In some embodiments, the coating may be removed in areas where heat is present.

In one embodiment, optical lens 350 may be positioned to receive one or more excitation rays 360 from source 300, as shown in FIG. 3A. In some embodiments, excitation rays 360 may be filtered or have their spectral range adjusted by first filter 330 prior to be received by lens 350.

Beam splitter 320 may direct excitation rays 360 (filtered or unfiltered) towards optical lens 350. Lens 350 may receive the excitation rays 360 and may focus rays 360 onto the one or more outlets 40, where outlets 40 may include markers that may have optical characteristics that may be observable.

Emission rays 370 from the markers at outlets 40 may be filtered via second filter 340, and may subsequently be collected by sensor 310. Filter 340 may remove certain wavelengths introduced as the emission rays 370 pass by the splitter and/or other background wavelengths introduced during the transmission between the marker(s) and sensor 310.

Other adjustments may be made to emission rays 370 prior to being collected by sensor 310 including, without limitations, focusing using a focusing lens, polarization using a polarizer, and/or other suitable processing techniques known in the art.

Referring to FIGs. 3B and 3C, side views illustrating possible configurations for the detection of one or more markers carried by the one or more outlets 40 are shown. FIG. 3B illustrates the possible positions of emission rays 380 after being excited with source 300, contacting beam splitter 320, and passing through optical lens 350. FIG. 3C illustrates the possible positions of excitation rays 390 after emission rays 380 contact outlets 40 via optical lens 350.

Optionally, the markers and agent may be removed from outlet 40 and provided to detection component 50, remotely set apart from the microfluidic cell, using, for example, the liquid transfer systems, other capillaries, inlets, outlets, and a storage means for housing the markers and agent during the detection process. FIGs. 3A, 3B, and 3C can be modified to include a storage means coupled to spherical lens 350 instead of outlets 40.

In alternative embodiments, a detection component may be configured to detect absorption, as shown in FIG. 4. Excitation rays 360 from source 300 may be optionally filtered with filter 330 and subsequently directed towards optical lens 350, which may be aligned with source 300 to receive excitation rays 360. Optical lens 350 may focus rays 360 onto the one or more outlets 40, which may include one or markers (*e.g*., latent and/or activated). The illumination from excitation rays 360 may be absorbed by the markers and may cause the markers to emit a detectable signal, collected by detector 310.

Additional objects, advantages and novel features of the invention as set forth in the description, will be apparent to one skilled in the art after reading the foregoing detailed description or may be learned by practice of the invention. The objects and advantages of the invention may be realized and attained by means of the instruments and combinations particularly pointed out here.

### EXAMPLES

The following examples are included to demonstrate specific embodiments of this disclosure. It should be appreciated by those of ordinary skill in the art that the techniques disclosed in the examples that follow represent techniques discovered by the inventors to function well in the practice of the invention, and thus can be considered to constitute specific modes for its practice. However, those of ordinary skill in the art should, in light of the present disclosure, appreciate that many changes can be made in the specific embodiments which are disclosed and still obtain a like or similar result without departing from the scope of the invention.

### Example 1: The Affect of Flow Rate

The rate of transformation (from latent to active form) often depends on the flow rate through the microfluidic cell. For example, lower flow rates may allow for improved and increased diffusion of the markers from the liquid (*e.g*., the fuel) to the transforming agent, and thus, higher fluorescent signals may typically be detected. In addition, the extent of transformation and signal level often depends on channel volume and quantity of the transformable marker. In some embodiments, capillary and channel diameters may also affect reaction time.

A fluorescent signal was detected using a detector/detection assembly similar to that described in FIG. 3A. Components of the system were housed in a machined plastic unit. A BrightLite filter set from Semrock (New York) optimized for measuring the green fluorescent protein (GFP) was used. A light emitting diode (Roithner Lasertechnik, Austria) with a maximum output of about 470 nm was used as the source. The sensor had an integrated amplifier. The optical lens was a 5.0 millimeter diameter spherical lens from Edmond Optics (United Kingdom).

Detection was measured from a single capillary outlet coupled to the above-described detection assembly through a detecting capillary. In some embodiment, the detection technique may include, without limitation, luminescence, fluorescence, absorption, or via anti-stokes. The capillary outlet was coupled to the detecting capillary via a PTFE sleeve. The detecting capillary (Polymicro Technologies, Arizona) had an internal diameter of about 150 micometers, an external diameter of about 375 micrometers and was coated with polyimide. The coating was removed from the detecting capillary in certain areas where radiation may be present. The detecting capillary was positioned to generally touch the spherical lens. Data collected from each run was averaged over a 5.0 second period with a time constant of 3.0 milliseconds and a sampling rate of 512 readings per second.

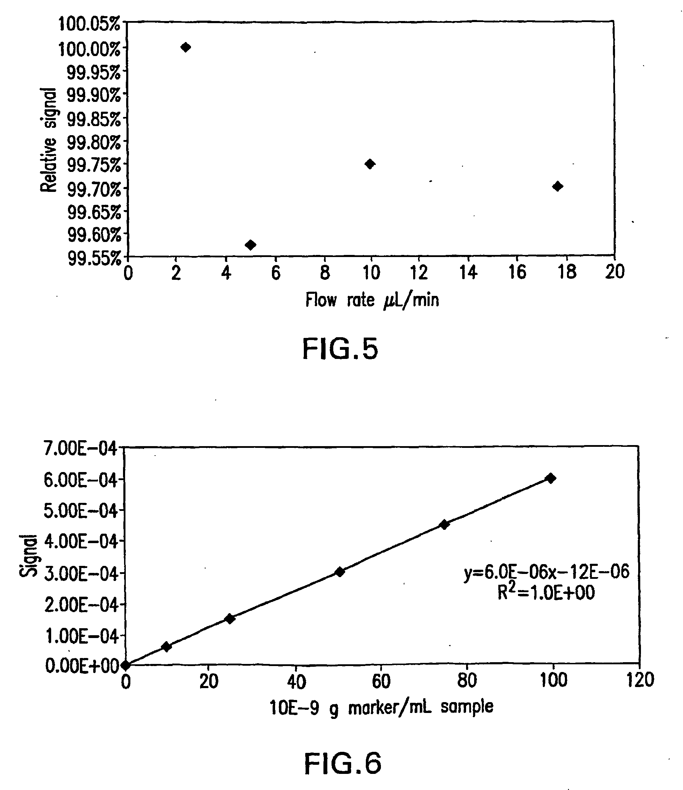

In this example, the concentration was 10x10⁻⁹ grams of marker per milliliter of ethanol. As shown in FIG. 5, changes in flow rate did not significant affect the rate of transformation (*e.g*., hydrolysis), as reflected by the relative signal detected by the detection component. Even a large reduction in the flow rate from 17.65 to 2.5 microliters per minute affected the reaction yield by 0.5%.

Subsequent analyses showing the quantitative nature of the present invention were performed using flow rates of 10 microlitres per minute from each syringe. FIG. 6 shows the relationship between the detection signal and the concentration of the marked sample, when flow rate was constant at 10 microliters per minute. Here, the detection signal correlated with marker concentration (R²=1.0). This shows that the present disclosure is suitable for detecting a covert marker at very low concentrations, even those at a nanoscale.

Accordingly, the presence of an additive or marker in a material (*e.g*., ethanol) may be identified and quantified. The quantification of the markers yielded extremely low levels of adulteration, levels which are suitable for forensic testing or other such analysis requiring evidence of misuse or authentication. In addition, analyses with the present disclosure are reproducible, have very narrow error margins (if any), require little sampling material, produce very little waste, present results in a matter of minutes or less that are quantifiable. The present invention is also robust and not delicate and therefore, suitable for use in the field or for *in situ* analysis.

### Example 2: Authenticating Potable Ethanol

Potable ethanol is often adulterated illegally with lower grade, and thus poses a need for a reliable, robust, and convenient authentication method. In this example, non potable ethanol was marked with a covert marker and used to enable identification and authentication of potable ethanol adulterated with the non potable form.

The marker used to identify non potable ethanol was fluorescein diacetate, a marker that has no significant fluorescence when dissolved in ethanol. While fluorescein diacetate was used, any suitable marker with similar properties may be used. This includes markers that reside in an inactive form and may be transformed to an active form that is identifiable and quantifiable by a detector. Fluorescein diacetate may be transformed (via hydrolysis) in alkaline solutions to produce fluorescein to an active form with light emitting properties that are detectable by an appropriate light detector.

In one example of the present disclosure, fluorescein diacetate was dissolved in non potable ethanol at a concentration of 10 micrograms per millilitre. This concentrated solution was then used to covertly mark non potable ethanol at final concentrations ranging from about 10 to 100 nanograms marker per milliliter of non potable ethanol. The final concentrations of fluorescein diacetate used in the example were: 10x10⁻⁹ grams/mL of ethanol, 25x10⁻⁹ grams/mL of ethanol, 50x10⁻⁹ grams/mL of ethanol, 75x10⁻⁹ grams/mL of ethanol, and 100x10⁻⁹ grams/mL of ethanol.

The alkaline solution was 2.0 mole per liter of sodium hydroxide prepared by dissolving 0.8 grams of sodium hydroxide in a mixture of 5.0 milliliters of water and 5.0 milliliters of methanol. The 10 milliliters alkaline solution was sufficient to perform hundreds of analysis runs with the present disclosure.

Simultaneous introduction of the marked ethanol and the alkaline solution were performed using a dual syringe driver. The dual syringe driver was capable of delivering liquid from each of the two syringes at flow rates of up to 17.65 microliters per minute. The marked ethanol was pumped into the microfluidic cell via one capillary inlet and the alkaline solution was simultaneously pumped into the microfluidic cell via a separate capillary inlet, producing a laminar, parallel flow. Transformation of fluorescein diacetate occurred in the microfluidic cell in the presence of the alkaline solution after which the solution exited the cell and was identified and quantified by a detector. Typically, transformation and detection was complete after a few minutes.

For analysis, the lowest concentration of marked ethanol was used first; each subsequent concentration used was of a greater concentration. The extent of transformation (in this case, hydrolysis) was tested by varying the flow rate. Flow rates of 2.5, 5, 7.5, 10, 12.5, 15, and 17.65 microlitres per minute were used. With each run, liquid from each of the capillary inlets filled the channel of the glass support within seconds. It is noted that transformation can be performed using other techniques, including, without limitation, oxidation, reduction, structural modification (*e.g*., dissolving the marker), ionization, electrolysis, complexation, or a combination thereof.

### Example 3: Plug Flow

In one embodiment, system 65 of FIG. 1 may be modified to include a reservoir/mixer for providing a plug flow. In one respect, a material comprising latent markers and a first agent (*e.g*., aqueous ethanol) that may transform the latent markers may be introduced to a microfluidic cell using techniques described above (*e.g*., using a pump system and the like). The introduction of the material simultaneous with the agent provides a laminar flow.

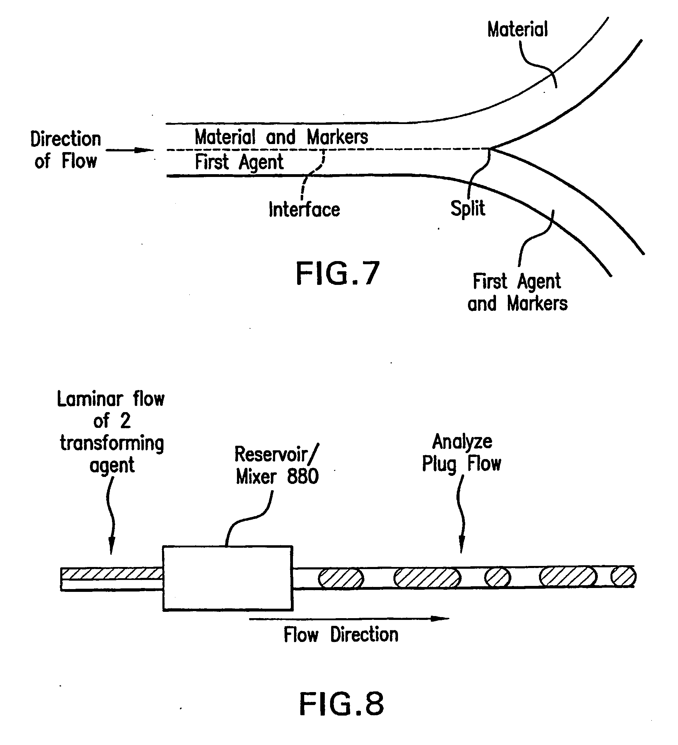

In one respect, the material may subsequently be split from the latent markers and removed via an outlet (*e.g*., outlet 40 of FIG. 2), leaving only the latent markers. For example, referring to FIG. 7, as the material and markers flow through the microchannel, the markers may penetrate through the interface into the first agent, and thus at the split, the material may be subsequently removed, leaving the marker and first agent. In one respect, a driving equilibrium (*e.g*., pH levels) may be adjusted causing the markers to diffuse from the material to the first agent.

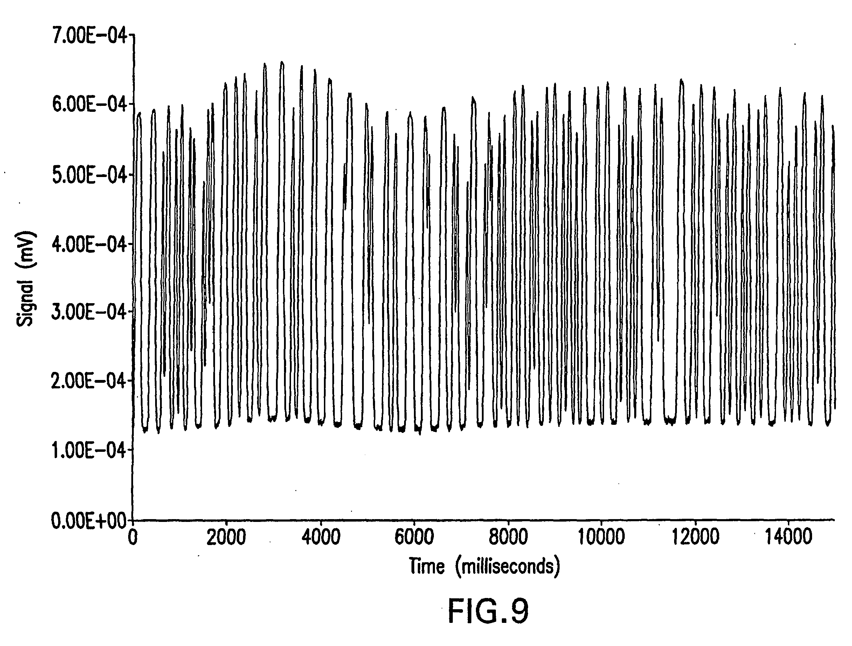

Next, a second agent (*e.g*., octanol) may be added to the latent markers to produce another laminar flow between the first and second agent, as shown in FIG. 8. This laminar flow may be passed through reservoir/mixer 880 which mixes the two fluid stream and transforms the latent markers. The result is a plug flow that includes activated markers that can be identified and quantified. Subsequent authentication of the material may be also performed, using techniques of the present disclosure. Referring to FIG. 9, a graph illustrating the signal detected using the above techniques corresponding to the concentration of the markers is shown.

The above embodiment provides a simple technique that eliminates a need of a second separation step of the two liquid phases that would add unnecessary complication to the instrument.

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept of the invention. More specifically, it will be apparent that certain compositions which are chemically related may be substituted for the compositions described herein while the same or similar results would be achieved. All such similar substitutes and modifications apparent to those skilled in the art are deemed to be within the concept of the invention as defined by the appended claims.

## Claims

1. A method for identifying and quantifying latent markers in a material, the method comprising:
providing a micro fluidic cell comprising at least one inlet and one or more outlets; providing the material comprising at least one latent marker to the microfluidic cell;
providing one or more liquids comprising an agent for transforming a portion of the at least one latent marker;
transforming the at least one latent marker to at least one active marker;
detecting the active form of the at least one active marker using an electromagnetic radiation source;
identifying and quantifying the at least one active marker; and authenticating the material.

2. The method of claim 1, where the steps of providing the material and the one or more liquids comprising providing a liquid transfer system configured to deliver the material and the one or more liquids to the microfluidic cell.

3. The method of claim 1, the electromagnetic radiation source providing an ultraviolet light, a visible light, an infrared light, or combinations thereof.

4. The method of claim 1, the step of transforming comprising hydrolysis, oxidation, reduction, structural modification, ionization, electrolysis, complexation, or a combination thereof.

5. The method of claim 1, where the step of providing the material and providing the one or more liquids are performed simultaneously.

6. The method of claim 1, where one of the one or more liquids comprises a solvent that controls quenching of the at least one active marker.

7. The method of claim 1, the step of providing a material comprising providing a fuel, a lubricant, spirits, or a liquid pharmaceutical.

8. The method of claim 1, the step of providing an agent comprising providing an acidic or base solution.

9. Use of a device for identifying and quantifying latent markers in a material comprising:
a microfluidic cell receiving the material comprising one or more latent markers, the microfluidic cell comprising at least one inlet and one or more outlets;
a liquid transfer system coupled to the microfluidic cell delivering the material to the microfluidic cell and delivering an agent to the microfluidic cell, the agent configured to transform the one or more latent markers to at least one active marker;
a detector system comprising an electromagnetic radiation source and a sensor detecting and quantifying the active markers.

10. The use of a device of claim 9, the detector system further comprising a data collector, data input device, data analyzer, data storage device, data output device, data retrieval device, or combinations thereof

11. The use of a device of claim 9, where the liquid transfer system is operably coupled to at least one pump driver configured to provide components to the microfluidic device.

12. The use of a device of claim 11, the liquid transfer system comprising a syringe and the at least one pump driver is a syringe driver.

13. The use of a device of claim 9, where the electromagnetic radiation source comprises an ultraviolet source, a visible light source, an infrared light source, or a combination thereof.

14. The use of a device of claim 9, the microfluidic cell further comprising an upper portion, a lower portion, and at least one channel coupled to the at least one inlet for receiving the material and agent.

15. The use of a device of claim 14, where the at least one channel is coupled to the lower portion of the microfluidic cell.

16. The use of a device of claim 9, wherein the material includes a fuel, a lubricant, spirits or liquid pharmaceuticals.

17. The use of a device of claim 9, wherein the agent includes an acidic solution or a base solution.

## Patentansprüche

1. Verfahren zum Identifizieren und Quantifizieren latenter Marker in einem Material, das Verfahren umfassend:
Bereitstellen einer mikrofluidischen Zelle die mindestens einen Eingang und einen oder mehrere Ausgänge umfasst; Bereitstellen des Materials, das mindestens einen latenten Marker umfasst für die mikrofluidische Zelle;
Bereitstellen einer oder mehrerer Flüssigkeiten, die ein Mittel zum Umwandeln eines Teils des mindestens einen latenten Markers umfasst;
Umwandeln des mindestens einen latenten Markers zu mindestens einem aktiven Marker;
Detektieren der aktiven Form des mindestens einen aktiven Markers unter Verwendung einer elektromagnetischen Strahlenquelle;
Identifizieren und Quantifizieren des mindestens einen aktiven Markers; und
Authentifizieren des Materials.

2. Verfahren nach Anspruch 1, wobei die Schritte des Bereitstellens des Materials und der einen oder mehreren Flüssigkeiten das Bereitstellen eines Flüssigkeitsübertragungssystems umfassen, das gestaltet ist, um das Material und die einen oder mehreren Flüssigkeiten an die mikrofluidische Zelle zu liefern.

3. Verfahren nach Anspruch 1, wobei die elektromagnetische Strahlenquelle ein ultraviolettes Licht, ein sichtbares Licht, ein Infrarotlicht oder Kombinationen davon bereitstellt.

4. Verfahren nach Anspruch 1, wobei der Schritt des Umwandelns Hydrolyse, Oxidation, Reduktion, strukturelle Modifikation, Ionisierung, Elektrolyse, Komplexbildung oder eine Kombination davon umfasst.

5. Verfahren nach Anspruch 1, wobei die Schritte des Bereitstellens des Materials und Bereitstellens der einen oder mehreren Flüssigkeiten gleichzeitig durchgeführt werden.

6. Verfahren nach Anspruch 1, wobei eine der einen oder mehreren Flüssigkeiten ein Lösungsmittel umfasst, das Abschrecken des mindestens einen aktiven Markers kontrolliert.

7. Verfahren nach Anspruch 1, wobei der Schritt des Bereitstellens des Materials das Bereitstellen eines Brennstoffs, eines Schmiermittels, Spirituosen oder eines flüssigen Pharmazeutikums umfasst.

8. Verfahren nach Anspruch 1, wobei der Schritt des Bereitstellens eines Mittels das Bereitstellen einer säurehaltigen oder basischen Lösung beinhaltet.

9. Benutzung einer Vorrichtung zum Identifizieren und Quantifizieren latenter Marker in einem Material umfassend:
eine mikrofluidische Zelle, die das Material, das einen oder mehrere latente Marker umfasst, empfängt, wobei die mikrofluidische Zelle mindestens einen Eingang und einen oder mehrere Ausgänge umfasst;
ein Flüssigkeitsübertragungssystem gekoppelt an die mikrofluidische Zelle, das das Material an die mikrofluidische Zelle liefert und ein Mittel an die mikrofluidische Zelle liefert, wobei das Mittel gestaltet ist, um den einen oder die mehreren Marker in mindestens einen aktiven Marker umzuwandeln;
ein Detektorsystem, das eine elektromagnetische Strahlenquelle und einen Sensor umfasst, der die aktiven Marker detektiert und quantifiziert.

10. Benutzung einer Vorrichtung nach Anspruch 9, wobei das Detektorsystem weiter einen Datensammler, Dateneingabevorrichtung, Datenanalysator, Datenspeicherungsvorrichtung, Datenausgabevorrichtung, Datenabfragevorrichtung oder Kombinationen davon umfasst.

11. Benutzung einer Vorrichtung nach Anspruch 9, wobei das Flüssigkeitsübertragungssystem funktionsfähig an mindestens einen Pumpentrieb gekoppelt ist, gestaltet um Komponenten für die mikrofluidische Zelle bereitzustellen.

12. Benutzung einer Vorrichtung nach Anspruch 11, wobei das Flüssigkeitsübertragungssystem eine Spritze umfasst und der mindestens eine Pumpentrieb ein Spritzentrieb ist.

13. Benutzung einer Vorrichtung nach Anspruch 9, wobei die elektromagnetische Strahlenquelle eine ultraviolette Quelle, eine Quelle sichtbaren Lichts, eine Infrarotlichtquelle oder eine Kombination davon umfasst.

14. Benutzung einer Vorrichtung nach Anspruch 9, wobei die mikrofluidische Zelle weiter einen oberen Teil, einen unteren Teil und mindestens einen Kanal umfasst, gekoppelt an den mindestens einen Eingang zum Empfangen des Materials und des Mittels.

15. Benutzung einer Vorrichtung nach Anspruch 14, wobei der mindestens eine Kanal an den unteren Teil der mikrofluidischen Zelle gekoppelt ist.

16. Benutzung der Vorrichtung nach Anspruch 9, wobei das Material einen Brennstoff, ein Schmiermittel, Spirituosen oder flüssige Pharmazeutika beinhaltet.

17. Benutzung der Vorrichtung nach Anspruch 9, wobei das Mittel eine säurehaltige Lösung oder eine basische Lösung beinhaltet.

## Revendications

1. Procédé d'identification et de quantification de marqueurs latents dans un matériau, le procédé comprenant :
la fourniture d'une cellule microfluidique comprenant au moins une admission et une ou plusieurs sorties ; la fourniture du matériau comprenant au moins un marqueur latent à la cellule microfluidique ;
la fourniture d'un ou de plusieurs liquides comprenant un agent pour transformer une partie de l'au moins un marqueur latent ;
la transformation de l'au moins un marqueur latent en au moins un marqueur actif ;
la détection de la forme active de l'au moins un marqueur actif au moyen d'une source de rayonnement électromagnétique ;
l'identification et la quantification de l'au moins un marqueur actif ; et
l'authentification du matériau.

2. Procédé selon la revendication 1, dans lequel les étapes de fourniture du matériau et des un ou plusieurs liquides comprennent la fourniture d'un système de transfert liquide configuré pour délivrer le matériau et les un ou plusieurs liquides à la cellule microfluidique.

3. Procédé selon la revendication 1, la source de rayonnement électromagnétique fournissant une lumière ultraviolette, une lumière visible, une lumière infrarouge, ou des combinaisons de celles-ci.

4. Procédé selon la revendication 1, l'étape de transformation comprenant l'hydrolyse, l'oxydation, la réduction, la modification structurelle, l'ionisation, l'électrolyse, la complexation, ou une combinaison de celles-ci.

5. Procédé selon la revendication 1, dans lequel l'étape de fourniture du matériau et l'étape de fourniture des un ou plusieurs liquides sont effectuées simultanément.

6. Procédé selon la revendication 1, dans lequel un des un ou plusieurs liquides comprend un solvant qui régule la désactivation de l'au moins un marqueur actif.

7. Procédé selon la revendication 1, dans lequel l'étape de fourniture d'un matériau comprend la fourniture d'un combustible, d'un lubrifiant, d'alcools ou d'un produit pharmaceutique liquide.

8. Procédé selon la revendication 1, dans lequel l'étape de fourniture d'un agent comprend la fourniture d'une solution acide ou basique.

9. Utilisation d'un dispositif d'identification et de quantification de marqueurs latents dans un matériau comprenant :
une cellule microfluidique recevant le matériau comprenant un ou plusieurs marqueurs latents, la cellule microfluidique comprenant au moins une admission et une ou plusieurs sorties ;
un système de transfert de liquide couplé à la cellule microfluidique, délivrant le matériau à la cellule microfluidique et délivrant un agent à la cellule microfluidique, l'agent étant configuré pour transformer les un ou plusieurs marqueurs latents en au moins un marqueur actif ;
un système détecteur comprenant une source de rayonnement électromagnétique et un capteur qui détecte et quantifie les marqueurs actifs.

10. Utilisation d'un dispositif selon la revendication 9, le système de détecteur comprenant en outre un collecteur de données, un dispositif d'entrée de données, un analyseur de données, un dispositif de mémorisation de données, un dispositif de sortie de données, un dispositif d'extraction de données, ou des combinaisons de ceux-ci.

11. Utilisation d'un dispositif selon la revendication 9, dans lequel le système de transfert de liquide est couplé opérationnellement à au moins un actionneur de pompe configuré afin de fournir des composants au dispositif microfluidique.

12. Utilisation d'un dispositif selon la revendication 11, le système de transfert de liquide comprenant une seringue et l'au moins un actionneur de pompe est un actionneur de seringue.

13. Utilisation d'un dispositif selon la revendication 9, dans lequel la source de rayonnement électromagnétique comprend une source de lumière ultraviolette, une source de lumière visible, une source de lumière infrarouge, ou une combinaison de celles-ci.

14. Utilisation d'un dispositif selon la revendication 9, la cellule microfluidique comprenant en outre une partie supérieure, une partie inférieure, et au moins un canal couplé à l'au moins une entrée pour recevoir le matériau et l'agent.

15. Utilisation d'un dispositif selon la revendication 14, dans lequel l'au moins un canal est couplé à la partie inférieure de la cellule microfluidique.

16. Utilisation d'un dispositif selon la revendication 9, dans lequel le matériau comprend un combustible, un lubrifiant, des alcools ou des produits pharmaceutiques liquides.

17. Utilisation d'un dispositif selon la revendication 9, dans lequel l'agent comprend une solution acide ou une solution basique.
